# FASCICULE DE BREVET EUROPEEN

(11) **EP 2 488 426 B1**
(45) Date de publication et mention de la délivrance du brevet: **28.12.2016**
(21) Numéro de dépôt: 10785469.7
(22) Date de dépôt: 13.10.2010
(51) Int. Cl.: B65D 83/42, B65D 83/62, B65D 83/40

(54) **DISPOSITIF DE TYPE RECHARGEABLE POUR PROPULSER UN PRODUIT A L'AIDE D'UN GAZ SOUS PRESSION**
NACHFÜLLBARE VORRICHTUNG FÜR DEN ANTRIEB EINES PRODUKTS MIT DRUCKGAS
REFILLABLE DEVICE FOR PROPELLING A PRODUCT BY MEANS OF A PRESSURISED GAS

(30) Priorité: 14.10.2009 FR 0957206
(43) Date de publication de la demande: 22.08.2012
(60) Demande divisionnaire: 15153567.1
(73) Titulaire: Inospray, 16440 Nersac (FR)
(72) Inventeur: BERNAD, Christian, F-24490 Saint-michel-de-riviere (FR)
(74) Mandataire: Ipside
(86) Numéro de dépôt international: PCT/FR2010/052173
(87) Numéro de publication internationale: WO 2011/045538

(56) Documents cités:
- EP-A1- 0 776 834
- EP-A1- 2 107 012
- WO-A1-95/05322
- DE-A1- 4 002 580
- DE-A1- 19 513 886
- FR-A1- 2 785 594
- US-A- 5 343 901
- US-A1- 2009 108 021

## Description

La présente invention se rapporte à un dispositif de type rechargeable pour propulser un produit actif à l'aide d'un gaz sous pression.

Il existe de nombreux dispositifs de conditionnement de produits actifs propulsés à l'aide d'un gaz sous pression appelés également aérosols.

Selon un mode de réalisation, les aérosols sont à usage unique et ne peuvent pas être réutilisés.

Ils comprennent un réservoir de forme cylindrique avec en partie supérieure un dôme serti au bord supérieur circulaire du réservoir, comportant en partie centrale une valve équipée ou non d'une buse. Les dômes et les valves sont produits à grande échelle et sont des éléments standardisés.

Après l'assemblage par sertissage du réservoir cylindrique, du dôme et de la valve, l'aérosol est rempli d'un produit actif et d'un gaz propulseur via la valve.

La valve est par la suite équipée d'une buse dont les formes sont adaptées en fonction de la forme souhaitée du jet du produit actif.

Ce mode de réalisation présente de nombreux avantages comme par exemple un mélange optimisé du produit actif et du gaz propulseur et des pièces standardisées fabriquées et assemblées avec des coûts réduits.

Le principal inconvénient de ce mode de réalisation réside dans la quantité de déchets produits en fin de vie du fait que ces aérosols sont à usage unique.

Selon un autre inconvénient, ce type d'aérosol contenant un gaz sous pression est soumis à des normes de stockage et d'utilisation draconiennes liées à la législation des réservoirs sous pression.

Pour pallier ces inconvénients, un atomiseur rechargeable a été développé. Le fait de pouvoir réutiliser l'aérosol permet de réduire les déchets. De plus, le produit actif peut être stocké avant son introduction dans l'aérosol à la pression atmosphérique.

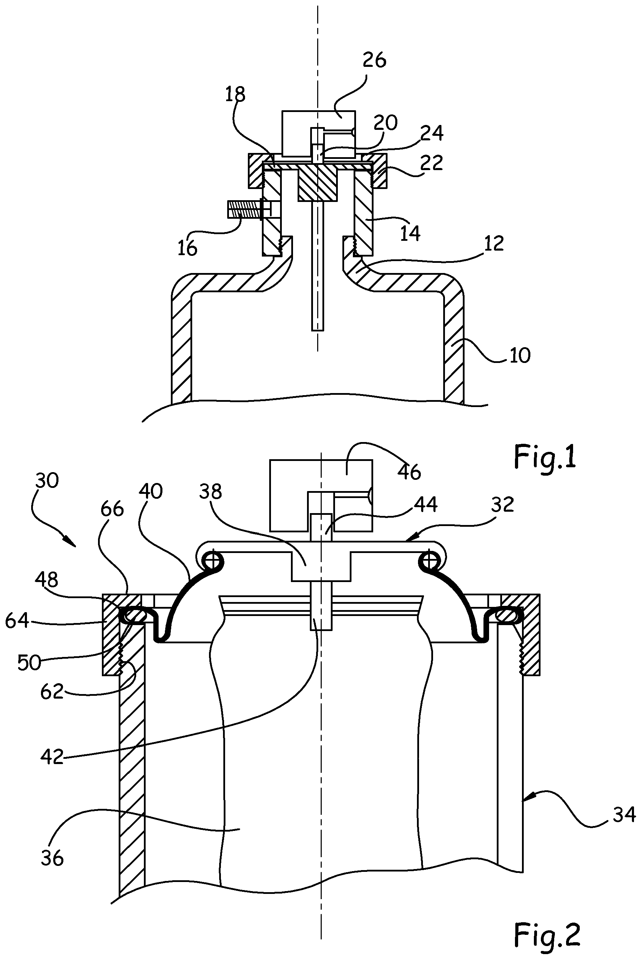

Comme illustré sur la figure 1, cet atomiseur comprend un réservoir 10 en forme de bouteille avec en partie supérieure un goulot 12 par lequel est introduit le produit actif. Le goulot 12 est surmonté d'un tube 14 vissé sur le goulot, comprenant au niveau de sa paroi latérale une alimentation 16 en gaz sous pression.

L'extrémité supérieure du tube 14 est obturée par une collerette 18 supportant une valve 20. Pour maintenir la collerette de la valve en contact avec le tube et reprendre les efforts liés à la pression présente dans le réservoir 10, une bague 22 se visse à l'extrémité supérieure extérieure du tube 14 et comprend un épaulement 24 apte à prendre appui à la périphérie de la surface supérieure de la collerette de la valve.

Enfin, une buse 26 est avantageusement rapportée sur la valve 20 pour former un jet de produit adéquat.

Pour remplir cet atomiseur, l'utilisateur doit au préalable démonter la bague 22, la valve 20 et de préférence le tube 14. Après avoir versé le produit actif dans le réservoir, il procède en sens inverse au vissage du tube 14, à la mise en place de la valve 20 puis au vissage de la bague 22. Pour pouvoir propulser le produit actif, l'utilisateur doit introduire un gaz sous pression, par exemple de l'air comprimé, via l'alimentation 16. A cet effet, il peut utiliser un compresseur qu'il branche à une connexion adaptée prévue au niveau du tube 14. Généralement, un manomètre permet de contrôler la pression à l'intérieur du réservoir.

Pour appliquer le produit actif, l'utilisateur opère de la même manière qu'avec un aérosol à usage unique.

Lors de l'utilisation, si la pression sur la valve n'assure plus la propulsion du produit actif, deux cas sont envisageables, soit la pression du gaz propulseur est trop faible ou soit la quantité de produit actif est insuffisante. Dans le premier cas, l'utilisateur peut ajuster la pression à l'intérieur du réservoir en introduisant le gaz sous pression via l'alimentation 16. Dans le second cas, il doit re-remplir le réservoir.

Toutefois, cette opération de re-remplissage peut s'avérer problématique voire dangereuse. En effet, l'opérateur ne dispose d'aucun moyen pour déterminer si le fait que le produit ne soit plus propulsé découle d'un manque de produit actif ou de gaz sous pression. Dans le cas d'un manque de produit actif, la pression à l'intérieur du réservoir peut être relativement importante si bien que lorsque l'utilisateur dévisse manuellement la bague, la valve peut être propulsée par le gaz propulseur et le reste du produit actif jaillir à l'extérieur du réservoir.

Pour solutionner ce problème, il est possible de prévoir des moyens pour indiquer la pression à l'intérieur du réservoir. Toutefois, ces moyens ont un coût relativement élevé, rédhibitoire dans le cas présent.

Selon un autre inconvénient, lors du remplissage, le produit actif doit être transvasé d'un premier réservoir au niveau duquel il est stocké à la pression atmosphérique dans le réservoir de l'atomiseur rechargeable. Or, cette opération de transvasement n'est pas pratique à réaliser.

On connait également d'après le document FR-2.785.594 un atomiseur de type rechargeable. Ce dernier comprend deux parties, d'une part un réservoir de forme cylindrique avec une ouverture en partie supérieure, et d'autre, une recharge comportant une poche fermée contenant un produit à propulser, un dôme avec une valve équipée en partie inférieure d'un conduit qui pénètre dans la poche fermée de manière à faire communiquer l'intérieur et l'extérieur de la poche.

La poche est introduite dans le réservoir via l'ouverture supérieure de manière à ce que la périphérie du dôme coopère avec la périphérie de l'ouverture. Une bague avec un filetage intérieur se visse au niveau d'un filetage prévu au niveau de la paroi extérieure du réservoir délimitant l'ouverture supérieure pour maintenir le dôme contre le réservoir.

Le réservoir comprend également un clapet pour introduire un gaz sous pression. La solution proposée par le document FR-2.785.594 permet de résoudre les problèmes liés au transvasement du produit à propulser et facilite l'opération de recharge puisqu'il suffit d'introduire une nouvelle poche contenant le produit actif, équipée de son dôme et de sa valve au lieu de manipuler le produit actif.

Toutefois, cette solution n'est pas pleinement satisfaisante en matière de sécurité. En effet, comme précédemment, l'opérateur ne dispose d'aucun moyen pour déterminer si le fait que le produit ne soit plus propulsé découle d'un manque de produit actif ou de gaz sous pression. Dans le cas d'un manque de produit actif, la pression à l'intérieur du réservoir peut être relativement importante si bien que lorsque l'utilisateur dévisse manuellement la bague, la valve peut être propulsée par le gaz propulseur.

Par conséquent, comme précédemment, le document FR-2.785.594 ne comprend aucun moyen pour empêcher l'ouverture du réservoir en présence d'un gaz sous pression supérieur à un seuil donné.

Le document FR2 785 594 A1 décrit un distributeur réutilisable de produit liquide, pressurisé au moyen d'un gaz propulseur, comportant un boîtier, une poche, une coupelle porte valve montée sur un dôme, qui se fixe sur le boîtier au moyen d'une bague, et une valve pour lequel un col de la poche est maintenu entre un tube inférieur de la valve et des moyens d'accrochage internes du dôme autour du col.

Le document DE 40 02 580 A1 décrit un distributeur réutilisable de produit liquide, pressurisé au moyen d'un gaz propulseur comportant une poche dont un bord supérieur est emprisonné entre un dôme porte valve et un boîtier du distributeur.

Le document DE 195 13 886 A1 décrit un boîtier rechargeable de pulvérisation comportant un dôme porte valve fixé sur un boîtier par une bague.

Le document WO 95/05322 A1 décrit un dispositif de fermeture d'un boîtier contenant un fluide sous pression comportant un col du boîtier, un élément de fermeture de ce col, un premier pas de vis sur l'un des col et élément de fermeture, un second pas de vis sur l'autre de ces boîtier et élément de fermeture engageable avec le premier et des moyens d'engagement mutuels sur le col et l'élément de fermeture pour bloquer la rotation de l'élément de fermeture dans une direction de dévissage lorsque l'élément de fermeture est sous pression axiale dans une direction d'éjection du col du boîtier et pour lequel un orifice de décharge est prévu entre le col et l'élément de fermeture.

Le document US 2009/108021 A1 décrit un distributeur de produit liquide, pressurisé au moyen d'un gaz propulseur comportant une poche fixée sur un tube inférieur d'une valve.

Le document EP 0 776 834 A1 décrit un distributeur de produit liquide non rechargeable qui comporte un boîtier, un dôme de fixation d'un support de coupelle porte valve et une poche.

La poche est fixée sur un tube et insérée dans le boîtier. Le procédé comporte la mise dans le boîtier de glace sèche, l'insertion au travers du dôme dans le boîtier de la poche vide soudée sur le tube et du support dans la poche vide, la fixation de la coupelle porte valve sur le dôme et la fonte de la glace sèche pour pressuriser le boîtier.

Le document US 5 343 901 A décrit un récipient pourvu d'un col étroit adapté à recevoir un capuchon vissé ou serti. Dans le récipient se trouve un tube plongeur pour amener un produit depuis le récipient vers un dispositif pompe. Le tube plongeur est fixé à un support au moyen d'une pièce de retenue qui maintient le support et une poche barrière dans le récipient.

La partie supérieure de la poche support est fixée de manière étanche au support par l'intermédiaire de la partie support pour rendre étanche l'intérieur de la poche par rapport au récipient.

La poche est insérée dans le récipient roulée ou repliée en accordéon autour du tube plongeur puis gonflé dans le récipient. Pour remplir la poche une canule de remplissage est insérée dans le tube. Une première structure de ventilation constituée par une fente dans la pièce de retenue permet à l'air dans le récipient de s'échapper lors du remplissage de la poche. Une seconde structure de ventilation permet à l'air dans la poche de s'échapper lors du remplissage de la poche.

Aussi, la présente invention vise à pallier les inconvénients de l'art antérieur en proposant un dispositif pour propulser un produit actif à l'aide d'un gaz sous pression de type rechargeable simple et pratique d'utilisation, moins dangereux que les dispositifs similaires existants.

A cet effet, l'invention a pour objet un dispositif pour propulser un produit actif à l'aide d'un gaz sous pression, comportant d'une part un réservoir réutilisable avec en partie supérieure une ouverture et un filetage apte à coopérer avec le filetage d'une bague, d'autre part une recharge détachable du réservoir réutilisable comportant une poche fermée en un matériau souple contenant le produit actif, avec une sortie reliée à une valve prévue sur un dôme, la périphérie du dôme étant maintenue plaquée contre le pourtour de l'ouverture du réservoir réutilisable grâce à ladite bague, caractérisé en ce que le filetage du réservoir réutilisable a un diamètre supérieur ou égal à 7 cm pour rendre impossible le dévissage de la bague manuellement en présence d'un gaz sous pression à l'intérieur du réservoir.

D'autres caractéristiques et avantages ressortiront de la description qui va suivre de l'invention, description donnée à titre d'exemple uniquement, en regard des dessins annexés sur lesquels :
- la figure 1 est une coupe de la partie supérieure d'un dispositif selon l'art antérieur,
- la figure 2 est une coupe de la partie supérieure d'un dispositif selon l'invention,
- la figure 3 représente à gauche de l'axe médian une coupe du dispositif selon l'invention et à droite une vue latérale du même dispositif, et
- la figure 4 est une vue en perspective des différents éléments d'un dispositif selon l'invention à l'état démonté.

Sur les figures 2 à 4, on a représenté en 30 un dispositif pour propulser un produit actif à l'aide d'un gaz sous pression.

Par produit actif, on entend un liquide plus ou moins visqueux que l'on cherche à appliquer sous forme de fines gouttelettes par exemple. A titre d'exemple et de manière non limitative, le produit à propulser peut être une peinture, un dégrippant, un nettoyant, un produit alimentaire ou tout autre produit liquide plus ou moins visqueux.

Selon l'invention, le dispositif 30 comprend deux parties à savoir une recharge 32 et un réservoir réutilisable 34.

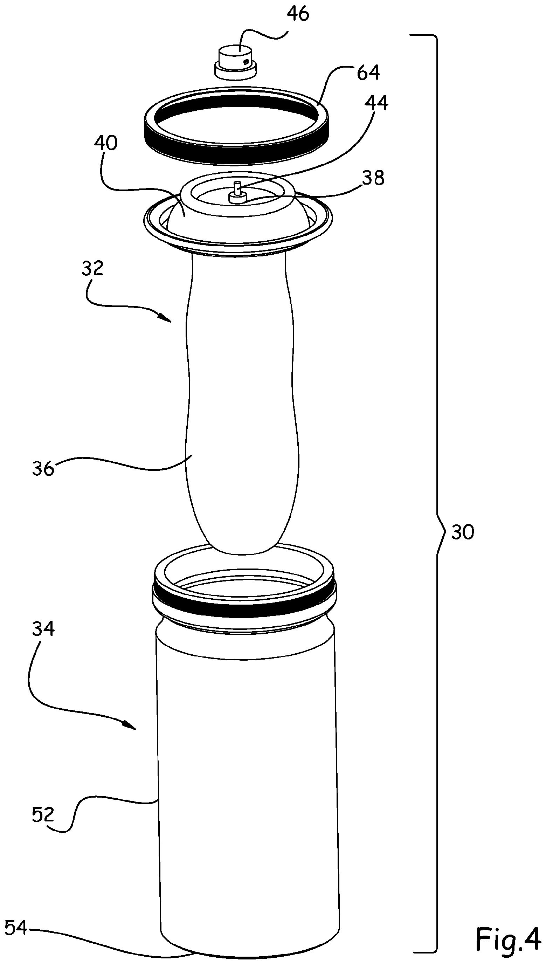

La recharge 32 illustrée de manière séparée sur la figure 4 comprend d'une part une poche 36 en un matériau souple contenant le produit actif à la pression atmosphérique ou à une pression proche de la pression atmosphérique non soumise à la réglementation des réservoirs sous pression, et d'autre part, une valve 38 sertie sur un dôme 40, ladite valve comprenant en partie inférieure un conduit 42 plongeant dans la poche 36 et en partie supérieure un conduit 44 apte à recevoir une buse 46.

En variante, on pourrait envisager d'utiliser une valve 38 spécifique dont la coupelle métallique repend la forme du dôme 40. Dans ce cas, la coupelle de la valve et le dôme ne constitue qu'une seule et même pièce ce qui évite l'opération de sertissage.

De préférence, la poche 36 est en un matériau souple mais sensiblement non extensible. Le fait d'être non extensible rend la poche plus résistante.

Pour réduire les coûts de production, la valve 38 est sensiblement identique à celle utilisée dans les aérosols non rechargeables et comprend une collerette dont la périphérie est sertie au niveau d'une ouverture ménagée au sommet d'un dôme 40. Il en est de même du dôme 40 qui contrairement aux aérosols non rechargeables n'est pas serti en usine sur un cylindre de manière à former un réservoir. Toutefois, l'invention n'est pas limitée à ce mode de réalisation, la coupelle de la valve pouvant avoir une forme de dôme et avoir une périphérie susceptible de prendre appui contre le bord de l'ouverture du réservoir réutilisable.

Pour la description, on entend par dôme 40 l'élément ou l'ensemble d'éléments sur lequel est prévue une valve et dont les formes sont adaptées pour fermer le réservoir réutilisable. A titre d'exemple, un dôme peut se présenter sous la forme d'un anneau bombé dont le bord intérieur coopère avec la périphérie d'une coupelle supportant la valve et dont le bord extérieur est susceptible de coopérer avec le bord de l'ouverture du réservoir réutilisable ou sous la forme d'un disque bombée supportant la valve et dont le bord extérieur est susceptible de coopérer avec le bord de l'ouverture du réservoir réutilisable.

Selon l'invention, le dôme 40 comprend au niveau de son bord périphérique une extrémité recourbée 48 apte à recevoir un joint 50, de préférence un joint torique, intercalé entre le dôme 40 et le réservoir réutilisable 34 une fois les deux parties du dispositif assemblées.

En variante, le joint 50 peut être un matériau élastique, de type élastomère par exemple, enduit à l'état liquide ou pâteux sur la face inférieure du dôme 40 qui après solidification assure la fonction d'étanchéité. Cette solution a pour avantage de lier le joint et le dôme et de faciliter la manutention de la recharge dans une chaîne de remplissage.

Contrairement aux dispositifs de l'art antérieur, la recharge 32 peut être reconditionnée à moindre coût puisqu'il suffit de séparer la poche du reste de la recharge. Ainsi, la valve et le dôme peuvent être reconditionnés et réutilisés pour constituer une nouvelle recharge. Seul le joint 50 est remplacé pour assurer toujours une étanchéité optimale.

La poche peut de son côté être introduite dans une chaîne de reconditionnement adaptée. Généralement, elle est broyée de manière à générer une matière première qui est mise en forme pour obtenir d'une nouvelle poche. La poche comprend généralement deux parois latérales reliées en partie inférieure et sur les côtés. Avant le remplissage, les bords supérieurs des deux parois latérales sont disjoints de manière à créer une ouverture. Après remplissage, les deux bords supérieurs sont soudés de manière à fermer la poche de manière hermétique.

Selon un mode d'assemblage, la poche 36 est remplie via une ouverture orientée vers le haut. Après son remplissage et avant de sceller l'ouverture, le conduit inférieur 42 de la valve est introduit dans l'ouverture. En suivant, la poche 36 est scellée en soudant les deux parois latérales entre lesquelles est intercalé le conduit inférieur 42 de la valve.

Dans ce cas, la poche 36 contenant le produit à propulser est fermée de manière hermétique et comprend une ouverture reliée à la valve afin de faire communiquer l'intérieur et l'extérieur de ladite poche 36 via la valve 38.

Le fait que la poche 36 soit fermée et comprennent une sortie du produit reliée à la valve facilite la recharge du réservoir réutilisable.

Le réservoir réutilisable 34 comprend un corps 52 de forme cylindrique avec un fond 54 obtenu par emboutissage.

Ce corps 52 comprend une alimentation 56 en gaz sous pression, par exemple sous forme d'une valve d'admission. Cette valve d'admission doit permettre de raccorder un raccord d'un compresseur d'air. Elle n'est pas plus décrite car elle est connue de l'homme du métier.

Selon un mode de réalisation privilégié, le fond 54 comprend une forme en creux à la manière d'un cul de bouteille, et l'alimentation 56 est disposée au niveau de cette forme en creux selon l'axe médian 58 du réservoir.

En complément du réservoir, on peut prévoir une station d'accueil du réservoir avec une forme en creux cylindrique dont le diamètre est adapté à celui du réservoir avec au niveau de son fond une connexion reliée à un compresseur d'air sous pression, apte à coopérer avec l'alimentation 56. Ainsi, pour recharger le réservoir, l'utilisateur l'insère dans la station d'accueil jusqu'à ce que la connexion de la station d'accueil et l'alimentation 56 soient connectées.

Avantageusement, le corps 52 comprend une soupape de sécurité 60 apte à libérer le gaz sous pression contenu dans le réservoir dès que sa pression dépasse un certain seuil. Cette soupape de sécurité n'est pas plus décrite car elle est connue de l'homme du métier. De préférence, elle est disposée au niveau du fond en creux du réservoir, décalée par rapport à l'axe médian.

Le corps 52 comprend en partie supérieure un filetage 62 qui peut coopérer avec un filetage prévu à l'intérieur d'une bague 64 apte à se visser à l'extrémité supérieure du corps du réservoir, ladite bague 64 comportant un épaulement 66 maintenant plaquée la périphérie du dôme 40 contre le pourtour de l'ouverture du réservoir, comme illustré en détails sur la figure 2. Selon une caractéristique importante de l'invention, le filetage 62 a un diamètre supérieur ou égal à de l'ordre de 7 cm.

De préférence, le filetage 62 est prévu au niveau de la surface extérieure de l'extrémité supérieure du corps 52 délimitant l'ouverture du réservoir.

A nombre de filets égal à la solution de l'art antérieur, il est impossible de dévisser la bague 64 manuellement en présence d'un gaz sous pression à l'intérieur du réservoir. En effet, en raison du diamètre important du filetage 62, la surface de contact entre la bague et le réservoir est très largement supérieure à celle de la solution de l'art antérieur si bien que les efforts de frottement rendent impossible le dévissage manuel de la bague 64 en présence d'un gaz sous pression à l'intérieur du réservoir. De plus, ces efforts de frottement sont sensiblement proportionnels à la pression du gaz sous pression si bien que plus la pression est importante à l'intérieur du réservoir (et donc que l'ouverture est dangereuse) et plus l'effort de dévissage est important.

Cette solution simple et économique permet de rendre plus sûre l'utilisation du dispositif de l'invention.

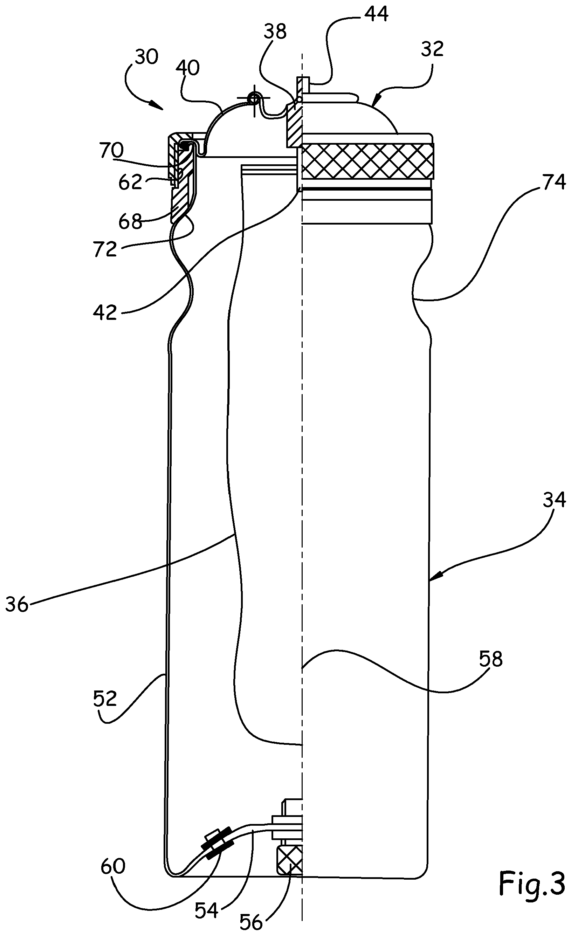

Selon une autre caractéristique de l'invention, le réservoir 34 comprend en partie supérieure un insert 68 au niveau duquel est pratiqué le filetage 62. Selon un mode de réalisation illustré sur la figure 3, l'insert 68 se présente sous la forme d'un manchon emmanché à l'extérieur de l'extrémité supérieure du corps 52. Au niveau de cette extrémité, le corps 52 a un diamètre réduit de manière à ce que le manchon 68 soit immobilisé en translation vers le bas. Une fois que le manchon 68 est mis en place, le bord supérieur 70 du corps 52 est recourbé vers l'extérieur de manière à ce que le manchon soit immobilisé en translation vers le haut. Après cette opération, le manchon ne peut plus se translater par rapport au corps 52. Pour l'immobiliser en rotation, le diamètre intérieur du manchon 68 est ajusté au diamètre extérieur du réservoir. En complément, le manchon comprend en partie inférieure un alésage évasé 72 qui coopère avec un profil évasé du réservoir pour obtenir un effet de coincement des deux formes évasées.

La présence de l'insert 68 permet de simplifier la réalisation du corps 52 qui ne présente aucun filetage. De plus, cet insert permet de sélectionner un couple de matériau entre la bague et l'insert qui renforce les frottements entre ces deux éléments.

Selon une autre caractéristique de l'invention, le corps 52 du réservoir comprend au moins une réduction de diamètre 74 pour faciliter la préhension du dispositif.

Selon un autre point, le réservoir 34 et la poche 36 ont des volumes adaptés pour propulser efficacement le produit actif. Ainsi, le volume du réservoir 34 est 2 à 3 fois plus important que celui de la poche 36.

Selon un mode de réalisation, le réservoir 34 a un volume de l'ordre de 800 ml et la poche 36 un volume de l'ordre de 300 ml.

L'utilisation du dispositif est très simple.

L'utilisateur dévisse la bague 64 et dispose dans le réservoir une nouvelle recharge 32 en plaçant la périphérie du dôme de la recharge en contact avec l'extrémité supérieure du corps 52 cylindrique. On peut noter que les recharges 32 peuvent être stockées dans un endroit qui n'est pas forcément adapté pour stocker des réservoirs sous pression comme les aérosols à usage unique.

En suivant, il revisse la bague 64. Le joint 50 assure un étanchéité satisfaisante entre la recharge 32 et le réservoir 34.

Pour pouvoir propulser le produit actif contenu dans la poche 36, l'utilisateur introduit un gaz sous pression via l'alimentation 56. Avantageusement, il peut utiliser de l'air comprimé dont la production est économique et largement répandue. On peut noter que le produit actif n'est pas en contact avec le gaz sous pression si bien qu'il est possible d'utiliser tout type de gaz sous pression sans risque d'altérer le produit actif.

L'utilisateur peut contrôler la pression du gaz introduit dans le réservoir grâce à un manomètre présent généralement au niveau des compresseurs d'air. Pour assurer une bonne propulsion, l'opérateur introduit le gaz sous pression jusqu'à ce que la pression atteigne de l'ordre de 8 bars. Pour assurer une bonne propulsion, la pression doit être comprise entre 4 et 8 bars. Cette pression, combinée au rapport entre le volume du réservoir et celui de la poche, assure une propulsion du produit actif optimisée.

Pour remplir les recharges, on peut utiliser le procédé suivant :

Au préalable, chaque dôme équipé d'une valve est disposé sur un chargeur, la face inférieure du dôme (celle orientée vers la poche) étant orientée vers le haut. Les dômes défilent au droit d'un premier poste visant à mettre en place le joint 50.

Ce poste peut comprendre une tête d'enduction visant à déposer un matériau à l'état liquide ou pâteux en périphérie du dôme de manière à obtenir après solidification un joint à l'état solide.

Après cette étape, la poche vide est solidarisée à la valve. Selon un mode de réalisation, la poche comprend deux parois sensiblement rectangulaires et identiques reliées au niveau de trois côtés, le quatrième côté orienté vers le dôme étant initialement ouvert. La poche est dans un premier temps positionnée par rapport au dôme, le conduit inférieur de la valve étant disposé entre les deux parois. Suite à ce positionnement, le quatrième côté de la poche est serti de manière à obtenir une fermeture étanche de la poche, l'intérieur de cette dernière communiquant avec l'extérieur via la valve.

L'ensemble poche, dôme et valve est positionné sur un support de forme analogue au réservoir, la poche étant disposée sous le dôme et le conduit supérieur de la valve orienté vers le haut. Pour le remplissage, on prévoit une tête de remplissage susceptible d'entourer le conduit supérieur de manière étanche (grâce par exemple à un joint torique), d'appliquer un effort vers le bas sur ledit conduit supérieur de manière à rendre la valve passante et d'introduire le produit actif via la valve dans la poche. En fin de remplissage, la tête de remplissage n'applique plus d'effort sur la valve de manière à la rendre non passante et aspire l'éventuel surplus de produit pour ne pas tâcher la recharge grâce par exemple à un effet venturi.

L'invention n'est aucunement limitée à ce procédé de réalisation et de remplissage de la recharge. D'autres solutions pourraient être envisagées.

## Revendications

1. Procédé de réalisation d'un dispositif pour propulser un produit actif à l'aide d'un gaz sous pression, comportant d'une part un réservoir (34) réutilisable avec en partie supérieure une ouverture et un filetage (62) apte à coopérer avec le filetage d'une bague (64), d'autre part une recharge (32) détachable du réservoir (34) réutilisable comportant une poche (36) fermée en un matériau souple contenant le produit actif, avec une sortie reliée à une valve (38) prévue sur un dôme (40), la périphérie du dôme (40) étant maintenue plaquée contre le pourtour de l'ouverture du réservoir réutilisable grâce à ladite bague (64), **caractérisé en ce que** la poche comprenant deux parois latérales reliées en partie inférieure et sur les côtés et dont les bords supérieurs sont disjoints avant remplissage de la poche, de manière à créer une ouverture orientée vers le haut de la poche, le procédé comporte une étape de remplissage de la poche, puis une étape d'introduction d'un conduit inférieur (42) de la valve dans ladite ouverture puis une étape de soudure des deux bords supérieurs des parois latérales de la poche l'un sur l'autre et sur le conduit inférieur en sorte de sceller la poche sur la valve et fermer la poche de manière hermétique.

2. Dispositif pour propulser un produit actif à l'aide d'un gaz sous pression réalisé selon le procédé de la revendication 1.

3. Dispositif pour propulser un produit actif selon la revendication 2, **caractérisé en ce que** le réservoir réutilisable comprend au moins une réduction de diamètre (74) pour faciliter la préhension dudit dispositif.

4. Dispositif pour propulser un produit actif à l'aide d'un gaz sous pression selon la revendication 2 ou 3, **caractérisé en ce que** le volume du réservoir réutilisable (34) est 2 à 3 fois plus important que celui de la poche (36) de la recharge.

5. Dispositif pour propulser un produit actif à l'aide d'un gaz sous pression selon l'une quelconque des revendications 2 à 4, **caractérisé en ce que** le réservoir (34) comprend un corps (52) avec une forme cylindrique ouverte à une extrémité et un insert (68) au niveau duquel est pratiqué le filetage (62), sous forme d'un manchon emmanché à l'extérieur de l'extrémité ouverte dudit corps (52).

6. Dispositif pour propulser un produit actif à l'aide d'un gaz sous pression selon la revendication 5, **caractérisé en ce que** le corps (52) à un diamètre réduit de manière à créer un épaulement, pour que l'insert (68) soit immobilisé en translation selon une direction, et un bord supérieur (70) recourbé vers l'extérieur de manière à ce que l'insert (68) soit immobilisé en translation selon la direction opposée.

7. Dispositif pour propulser un produit actif à l'aide d'un gaz sous pression selon la revendication 5 ou 6, **caractérisé en ce que** l'insert (68) comprend en partie inférieure un alésage évasé (72) qui coopère avec un profil évasé du réservoir pour obtenir un effet de coincement des deux formes évasées.

8. Dispositif pour propulser un produit actif à l'aide d'un gaz sous pression selon l'une quelconque des revendications 2 à 7, **caractérisé en ce que** le dôme (40) de la recharge comprend au niveau de son bord périphérique une extrémité recourbée (48) et un joint (50) disposé au niveau de ladite extrémité recourbée (48), ledit joint étant susceptible d'être intercalé entre ledit dôme (40) et le réservoir réutilisable (34) une fois les parties du dispositif assemblées.

9. Dispositif selon l'une quelconque des revendications 2 à 8, **caractérisé en ce que** le filetage (62) du réservoir réutilisable (34) et le diamètre de la bague (64) sont dimensionnés pour rendre impossible le dévissage manuel de la bague (64) lorsque le réservoir (34) est rempli avec un gaz sous pression avec une pression comprise entre 4 et 8 bars.

## Patentansprüche

1. Verfahren zur Herstellung einer Vorrichtung, um ein aktives Produkt mit Hilfe eines unter Druck stehenden Gases herauszusprühen, die einerseits einen wiederverwendbaren Behälter (34) mit einer Öffnung und einem Gewinde (62) im oberen Teil, das geeignet ist, mit dem Gewinde eines Rings (64) zusammenzuwirken, andererseits eine Nachfüllpatrone (32) aufweist, die von dem wiederverwendbaren Behälter (34) abnehmbar ist, die einen geschlossenen Beutel (36) aus einem flexiblen Material, der das aktive Produkt enthält, mit einem Auslass, der mit einem Ventil (38) verbunden ist, das auf einer Kuppel (40) vorgesehen ist, aufweist, wobei der Umfang der Kuppel (40) dank des Rings (64) gegen die Umrandung der Öffnung des wiederverwendbaren Behälters gedrückt gehalten wird, **dadurch gekennzeichnet, dass** der Beutel zwei Seitenwände aufweist, die im unteren Teil und an den Seiten verbunden sind und deren obere Ränder vor dem Befüllen des Beutels voneinander getrennt werden, so dass eine nach oben gerichtete Öffnung des Beutels entsteht, wobei das Verfahren einen Schritt des Befüllens des Beutels, dann einen Schritt des Einführens eines unteren Kanals (42) des Ventils in die Öffnung und dann einen Schritt des Verschweißens der zwei oberen Rändern der Seitenwände des Beutels miteinander und an dem unteren Kanal aufweist, so dass der Beutel an dem Ventil versiegelt wird und der Beutel hermetisch verschlossen wird.

2. Vorrichtung, um ein aktives Produkt mit Hilfe eines unter Druck stehenden Gases herauszusprühen, die gemäß dem Verfahren nach Anspruch 1 hergestellt wurde.

3. Vorrichtung, um ein aktives Produkt herauszusprühen, nach Anspruch 2, **dadurch gekennzeichnet, dass** der wiederverwendbare Behälter mindestens eine Reduzierung des Durchmessers (74) aufweist, um das Greifen der Vorrichtung zu erleichtern.

4. Vorrichtung, um ein aktives Produkt mit Hilfe eines unter Druck stehenden Gases herauszusprühen, nach Anspruch 2 oder 3, **dadurch gekennzeichnet, dass** das Volumen des wiederverwendbaren Behälters (34) um das 2- bis 3-fache größer als jenes des Beutels (36) der Nachfüllpatrone ist.

5. Vorrichtung, um ein aktives Produkt mit Hilfe eines unter Druck stehenden Gases herauszusprühen, nach einem der Ansprüche 2 bis 4, **dadurch gekennzeichnet, dass** der Behälter (34) einen Körper (52) mit einer zylindrischen Form, die an einem Ende offen ist, und einen Einsatz (68), an dem das Gewinde (62) ausgebildet ist, in Form von einer Muffe aufweist, die an der Außenseite des offenen Endes des Körpers (52) aufgesteckt ist.

6. Vorrichtung, um ein aktives Produkt mit Hilfe eines unter Druck stehenden Gases herauszusprühen, nach Anspruch 5, **dadurch gekennzeichnet, dass** der Körper (52) einen Durchmesser, der derart reduziert ist, dass eine Schulter erzeugt wird, damit der Einsatz (68) in einer Richtung in Translation immobilisiert wird, und einen oberen Rand (70) aufweist, der derart nach außen gebogen ist, dass der Einsatz (68) in der entgegengesetzten Richtung in Translation immobilisiert wird.

7. Vorrichtung, um ein aktives Produkt mit Hilfe eines unter Druck stehenden Gases herauszusprühen, nach Anspruch 5 oder 6, **dadurch gekennzeichnet, dass** der Einsatz (68) im unteren Teil eine aufgeweitete Bohrung (72) aufweist, die mit einem aufgeweiteten Profil des Behälters zusammenwirkt, um eine Klemmwirkung der zwei aufgeweiteten Formen zu erhalten.

8. Vorrichtung, um ein aktives Produkt mit Hilfe eines unter Druck stehenden Gases herauszusprühen, nach einem der Ansprüche 2 bis 7, **dadurch gekennzeichnet, dass** die Kuppel (40) der Nachfüllpatrone an ihrem Umfangsrand ein gebogenes Ende (48) und eine Dichtung (50) aufweist, die an dem gebogenen Ende (48) angeordnet ist, wobei die Dichtung geeignet ist, zwischen der Kuppel (40) und dem wiederverwendbaren Behälter (34) eingesetzt zu werden, nachdem die Teile der Vorrichtung zusammengebaut sind.

9. Vorrichtung nach einem der Ansprüche 2 bis 8, **dadurch gekennzeichnet, dass** das Gewinde (62) des wiederverwendbaren Behälters (34) und der Durchmesser des Rings (64) dimensioniert sind, um das manuelle Abschrauben des Rings (64) unmöglich zu machen, wenn der Behälter (34) mit einem unter Druck stehenden Gas mit einem Druck zwischen 4 und 8 bar befüllt ist.

## Claims

1. Method for producing a device for propelling an active product using a pressurized gas, comprising, on the one hand, a reusable tank (34) with, in the top part, an opening and a threading (62) capable of cooperating with the threading of a ring (64), on the other hand, a refill (32) that can be detached from the reusable tank (34) comprising a closed pocket (36) made of a flexible material containing the active product, with an outlet linked to a valve (38) provided on a dome (40), the periphery of the dome (40) being kept pressed against the perimeter of the opening of the reusable tank by virtue of said ring (64), **characterized in that** the pocket comprises two lateral walls linked in the bottom part and on the sides and of which the top edges are separate before filling of the pocket, so as to create an opening oriented towards the top of the pocket, the method comprises a step of filling of the pocket, then a step of introduction of a bottom pipe (42) of the valve into said opening then a step of welding of the two top edges of the lateral walls of the pocket together and to the bottom pipe so as to seal the pocket on the valve and close the pocket hermetically.

2. Device for propelling an active product using a pressurized gas produced according to the method of Claim 1.

3. Device for propelling an active product according to Claim 2, **characterized in that** the reusable tank comprises at least one diameter reduction (74) to facilitate the gripping of said device.

4. Device for propelling an active product using a pressurized gas according to Claim 2 or 3, **characterized in that** the volume of the reusable tank (34) is two to three times greater than that of the refill pocket (36).

5. Device for propelling an active product using a pressurized gas according to any one of Claims 2 to 4, **characterized in that** the tank (34) comprises a body (52) with a cylindrical form open at one end and an insert (68) on which is formed the threading (62), in the form of a sleeve fitted on the outside of the open end of said body (52).

6. Device for propelling an active product using a pressurized gas according to Claim 5, **characterized in that** the body (52) has a reduced diameter so as to create a shoulder, for the insert (68) to be translationally immobilized in one direction, and a top edge (70) curved outwards so that the insert (68) is translationally immobilized in the opposite direction.

7. Device for propelling an active product using a pressurized gas according to Claim 5 or 6, **characterized in that** the insert (68) comprises, in the bottom part, a flared bore (72) which co-operates with a flared profile of the tank to obtain an effect of wedging of the two flared forms.

8. Device for propelling an active product using a pressurized gas according to any one of Claims 2 to 7, **characterized in that** the dome (40) of the refill comprises, at its peripheral edge, a hooked end (48) and a seal (50) arranged at said hooked end (48), said seal being able to be inserted between said dome (40) and the reusable tank (34) once the parts of the device are assembled.

9. Device according to any one of Claims 2 to 8, **characterized in that** the threading (62) of the reusable tank (34) and the diameter of the ring (64) are dimensioned so as to make manual unscrewing of the ring (64) impossible when the tank (34) is filled with a pressurized gas with a pressure of between 4 and 8 bar.
